# EUROPÄISCHE PATENTSCHRIFT

(11) **EP 1 272 549 B1**
(45) Veröffentlichungstag und Bekanntmachung des Hinweises auf die Patenterteilung: **08.06.2005**
(21) Anmeldenummer: 00929225.1
(22) Anmeldetag: 20.03.2000
(51) Int. Cl.: C08J 5/04, C08J 5/24, D06M 15/256

(54) **PROCESS OF GENERATING PREPREGS OF YARNS**
METHOD FOR PRODUCING FIBER PREPREGS
PROCEDE DE PRODUCTION DE PREIMPREGNES DE FIBRES

(43) Veröffentlichungstag der Anmeldung: 08.01.2003
(73) Patentinhaber: P-D Tec Fil GmbH Technische Filamente, 04758 Oschatz (DE)
(72) Erfinder: FRENKEN, Johannes, 52080 Aachen (DE); RECTOR, Horst-Dieter, 52441 Linnich (DE)
(74) Vertreter: König, Werner, Dipl.-Ing.
(86) Internationale Anmeldenummer: PCT/DE2000/000833
(87) Internationale Veröffentlichungsnummer: WO 2001/070855

(56) Entgegenhaltungen:
- EP-A- 0 136 727
- EP-A- 0 292 572
- DE-A- 4 124 134
- DE-A- 4 137 627
- DE-A- 4 244 731
- DE-C- 19 726 802
- US-A- 4 731 283

## Beschreibung

Die Erfindung betrifft ein Verfahren zur Erzeugung von nicht brennbaren, hochtemperaturbeständigen Fadenprepregs sowie Anwendungen dieser Prepregs.

Bei den einschlägigen bekannten Verfahren kann nicht mit ausreichender Sicherheit erreicht werden, daß die einzelnen Filamente eines Fadenprepregs gleichmäßig und in gewünschtem Maße mit Beschichtungskunststoff ummantelt werden. Unmittelbarer Kontakt zwischen unbeschichteten Fasern kann dann die Folge sein, was dann schnell zu Faserbrüchen führen kann.

Bei der Beschichtung von Glasfasergeweben wird bisher üblicherweise so vorgegangen, daß zunächst ein Gewebe aus gezwirntem Garn hergestellt wird, das dann mit einem Beschichtungsmittel imprägniert wird. Anschließend erfolgt das Trocknen und Sintern. Daß dabei in den gezwirnten und eng in das Gewebe eingebundenen Fäden eine homogene Verteilung des Beschichtungskunststoffs sich nicht einstellen kann, liegt auf der Hand.

Die Aufgabe der vorliegenden Erfindung besteht nun darin, mit einfachen Mitteln in den Fäden und an ihrem Umfang einen Beschichtungskunststoff gleichmäßig verteilt und in der gewünschten Menge unterzubringen, um daraus hochbelastbare Fadenprepregs und aus diesen wiederum entsprechend hoch belastbare textile Gebilde herstellen zu können.

Diese Aufgabe wird bei einem Verfahren der eingangs erwähnten Art erfindungsgemäß dadurch gelöst, dass Glas- oder Aramid- oder Kohlefasern bei 0-Drehung oder bei einer Schutzdrehung von ≤ 120 Drehungen/m in einer PTFE-Dispersion getränkt werden, dass die getränkten Fasern durch eine Düse hindurchgeführt und dabei druckimprägniert werden, wobei die zwischen den Einzelelementen der Fasern noch befindliche Luft ausgepreßt und die Einzelfilamente vollständig mit PTFE ummantelt werden, und dass die so behandelten Fasern anschließend getrocknet werden.

Die geringe Drehung der Fäden führt zu einer unerwartet hohen Homogenität über den Fadenquerschnitt, die wiederum die Basis für deren hohe Belastbarkeit ist. Die geringe Drehung läßt ferner ein in vielen Anwendungen erwünschtes Zusammendrücken der Fäden zu, also die Bildung von flachen Fadenquerschnitten. Die Druckimprägnierung der Fasern gewährleistet, dass es bei Betriebsbelastung der mit diesen Prepregs hergestellten Produkte nicht zu Reibungen zwischen benachbarten Fasern kommt.

Erfindungsgemäß wird weiter vorgeschlagen, daß die nach Imprägnierung und Trocknung vorliegende PTFE-Konzentration der Fäden auf 3 bis 60% PTFE eingestellt wird. Diese zweckmäßige Konzentrationsangabe, die sich, wie alle nachfolgenden grundsätzlich ähnlichen Prozentangaben, auf das Gewicht des fertigen Prepregs bezieht, hat sich in Versuchen als besonders zweckmäßig erwiesen.

Erfindungsgemäß wird weiter vorgeschlagen, daß die Fäden vor der Imprägnierung mit einer Spinnschlichte auf PTFE-Basis von 0,3 bis 3% versehen werden. Dabei ist dann keine Entschlichtung der Fäden vor dem Imprägnieren notwendig, während z. B. bei der Verwendung einer Schlichte auf Stärkebasis ein Entschlichten der Fäden sinnvoll sein kann.

Erfindungsgemäß wird vorgeschlagen, die Prepregs unverzwirnt oder verzwirnt zu textilen Gebilden zu verarbeiten und anschließend in einem Hitzeprozess auszusintern. Diese textilen Gebilde können durch Weben, Wirken, Legen, Klöppeln oder Flechten erzeugt werden. In vielen Fällen wird es zweckmäßig sein, die textilen Gebilde schließlich zu kalandirieren.

Derartige textile Gebilde eignen sich in besonderem Maße zur Herstellung von Planen aller Art, aber u.a. auch von Leiterplatten, Isolierschläuchen, Backfolien, Transportbändern sowie von Mitteln, auch Bekleidungsstücken, für den Hitze- und Flammenschutz.

Ausführungsformen des erfindungsgemäßen Verfahren werden nachstehend beschrieben.

Nach einer solchen Ausführungsform werden Glas- oder Aramid- oder Kohlefasern bei einer Schutzdrehung von weniger als 120 Drehungen/m in einer PTFE-Dispersion getränkt. Danach werden die getränkten Fasern durch eine Düse hindurchgeführt, unmittelbar vor der sich dann ein Druck aufbaut, der die Dispersion in die Fasern hinein preßt und eine vollkommene Umhüllung der Einzelfilamente der Fasern bewirkt. Ferner hat dieser Druck zur Folge, dass in den Fasern eingeschlossene Restluft ausgepreßt wird. Die die Düse daraufhin passierenden Fasern haben einen massiven, völlig ausgefüllten definierten Querschnitt , dessen Beladung mit Dispersion aufgrund der Kenntnis des gesamten Faserquerschnitts zuverlässig bestimmt ist. Anschließend erfolgt die Trocknung der Fadenprepregs bildenden Fasern.

Die PTFE-Konzentration der Fadenprepregs wird bei Austritt aus der Düse nach dem jeweiligen Erfordernis auf einem Wert zwischen 3 bis 60% PTFE gehalten.

Die so entstandene Fadenprepregs werden aufgespult und zur Weiterverwendung bereitgestellt.

Die Weiterverwendung erfolgt durch Weben, Wirken, Legen, Klöppeln oder Flechten der so gebildeten Fadenprepregs. Nach einer solchen Verarbeitung kann das dann entstandene textile Gebilde kalandriert werden. Da die einzelnen Fadenprepregs aufgrund ihrer geringen Drehung flachdrückbar sind, läßt sich beim Kalandrieren der Gebilde eine sehr flache, geschlossene, folienartige Struktur erreichen.

Anschließend erfolgt dann ein Härte- oder Sintervorgang. Das dann vorliegende Gebilde kann insbesondere für Zeltplanen, Transportbahnen oder zum Schutz gegen Hitze und Flammen weiterverarbeitet werden.

Es ist auch möglich, den Grad der Beschichtung des textilen Gebildes dadurch noch zu erhöhen, daß das bis hierher vorliegende Produkt noch einmal mit Beschichtungskunststoff getränkt, getrocknet und gesintert wird.

Als Beschichtungskunststoff hat sich insbesondere PTFE bewährt.

Der in diesem Verfahren eingebrachten Fasern bestehen aus nicht brennbaren, temperaturbeständigen Fasern, insbesondere aus Glas oder Aramid.

## Patentansprüche

1. Verfahren zur Erzeugung von nicht brennbaren, hochtemperaturbeständigen Fadenprepregs,
**dadurch gekennzeichnet,**
**dass** Glas- oder Aramid- oder Kohlefasem bei 0-Drehung oder bei einer Schutzdrehung von ≤ 120 Drehungen/m in einer PTFE-Dispersion getränkt werden,
**dass** die getränkten Fasern durch eine Düse hindurchgeführt und dabei druckimprägniert werden, wobei die zwischen den Einzelfilamenten der Fasern noch befindliche Luft ausgepreßt und die Einzelfilamente vollständig mit PTFE ummantelt werden, und
**dass** die so behandelten Fasern anschließend getrocknet werden.

2. Verfahren nach Anspruch 1, **dadurch gekennzeichnet, daß** die Fäden vor der Imprägnierung mit einer Spinnschlichte auf PTFE-Basis von 0,3 bis 3% versehen werden.

3. Verfahren nach Anspruch 1 oder 2, **dadurch gekennzeichnet, daß** die nach Imprägnierung und Trocknung vorliegende PTFE-Konzentration der Fäden auf 3 bis 60% PTFE eingestellt wird.

4. Anwendung der nach einem der vorhergehenden Ansprüche hergestellten Prepregs, **dadurch gekennzeichnet, dass** sie unverzwimt oder verzwirnt zu textilen Gebilden verarbeitet und anschließend in einem Hitzeprozess ausgesintert werden.

5. Anwendung nach Anspruch 4, **dadurch gekennzeichnet, dass** die textilen Gebilde durch Weben, Wirken, Legen, Klöppeln oder Flechten erzeugt werden.

6. Anwendung nach Anspruch 4 oder 5, **dadurch gekennzeichnet, dass** die textilen Gebilde kalandriert werden.

## Claims

1. Method for producing incombustible, high-temperature resistant pre-impregnated threads,
**characterized in**
**that** glass or aramide or carbon fibres without twist or with a protective twist of ≤ 120 turns/m are soaked in a PTFE dispersion,
**that** the soaked fibres are conveyed through a die, where they are pressure impregnated, wherein the air still trapped between the individual filaments of the fibres is pressed out and the individual filaments are completely covered with PTFE and
**that** the fibres treated in this manner are subsequently dried.

2. Method according to claim 1, **characterized in that** a PTFE-based primary fibre size of 0,3 to 3 % is applied to the threads before impregnation.

3. Method according to claim 1 or 2, **characterized in that** the PTFE content of the threads after impregnation and drying is adjusted to 3 to 60 % PTFE.

4. Application of the prepregs manufactured according to one of the above claims, **characterized in that** they are processed non-folded or folded into textile goods and subsequently sintered under heat.

5. Application according to claim 4, **characterized in that** the textile goods can be produced by weaving, knitting, laying, lace making or braiding.

6. Application according to claim 4 or 5, **characterized in that** the textile goods are calendered.

## Revendications

1. Procédé pour la production de fils préimprégnés non combustibles, résistants aux hautes températures,
**caractérisé en ce**
**que** des fibres de verre, aramide ou carbone sans torsion ou présentant une torsion protectrice de ≤ 120 tours/m sont imbibées d'une dispersion de PTFE,
**qu'**on fait passer les fibres imbibées à travers d'une tuyère, où elles sont imprégnées sous pression, ce qui élimine les inclusions d'air se trouvant encore entre les filaments des fibres et enrobe les filaments complètement de PTFE et
**que** les fibres ainsi traitées sont ensuite séchées.

2. Procédé selon la revendication 1, **caractérisé en ce que** les fils, avant d'être imprégnés, sont revêtus d'un ensimage à base de PTFE de 0,3 - 3 %.

3. Procédé selon la revendication 1 ou 2, **caractérisé en ce que** la concentration de PTFE des fils, après leur imprégnation et séchage, est ajustée à 3 jusqu'à 60 % de PTFE.

4. Utilisation des préimprégnés, fabriqués selon une des revendications précédentes, **caractérisée en ce qu'**ils sont transformés - non retors ou retors - en articles textiles et ensuite frittés à haute température.

5. Utilisation selon la revendication 4, **caractérisée en ce que** les articles textiles peuvent être des tissus, tricots, nappes, dentelles au fuseau ou tresses.

6. Utilisation selon la revendication 4 ou 5, **caractérisée en ce que** les articles textiles sont calandrés.
